# EUROPEAN PATENT APPLICATION

(11) **EP 2 053 031 A1**
(43) Date of publication of application: **29.04.2009**
(21) Application number: 07721374.2
(22) Date of filing: 06.06.2007
(51) Int. Cl.: C04B 38/06, E04F 13/14, B32B 18/00

(54) **PREPARATION METHOD OF A TILE WITH SOLID PORES AS DECORATION AND ITS PRODUCT**

(30) Priority: 20.07.2006 CN 200610036616
(71) Applicant: Guangdong Dongpeng Ceramic Company Limited, Foshan, Guangdong 528031 (CN)
(72) Inventor: ZHONG, Baomin, Guangdong 528031 (CN); WANG, Zhengwang, Guangdong 528031 (CN); JIANG, Anning, Guangdong 528031 (CN); WANG, Jinfeng, Guangdong 528031 (CN)
(74) Representative: Hannke, Christian
(86) International application number: PCT/CN2007/001801
(87) International publication number: WO 2008/011786

(57) **Abstract**

A preparation method of a ceramic tile with solid pores as decoration and its product are provided. The method includes the following steps: preparing a fine material, including a facing material and a base material; distributing and dry-pressing the fine material to form a molded body; drying the molded body; firing the body to form a semi-product; treating the surface of the semi-product to form a finished product; preparing the facing material includes a preparation of a pattern facing material, at least a sort of which are provided as a pore former; forming the molded body includes distributing and dry-pressing the pore former with the facing material and base material; and firing the molded body includes firing the facing material under the firing temperature at a range between 1100 and 1250°C to form solid pores(10), fissures(11) and/or textures.

## Description

### FIELD OF THE INVENTION

The present invention relates to a preparation method of ceramic tile and its product used for building decoration, and more particularly to a preparation method of a ceramic tile with solid pores as decoration and its product with imitating-natural stone appearance.

### BACKGROUND OF THE INVENTION

At present ceramic product is more close to natural stone in aspects of color, texture, sense of touch, and performance results along with the constant progress in process equipment and method of decoration. The natural stone with solid pores is easier to be accepted and preferred by market and consumer because of the special decorative effects. However, the natural stone with solid pores has disadvantages of high price, low strength, easy wreathing, and going against environment protection and soil and water conservation by excessive mining. The artificial ceramic tile with solid pores with the advantages of low price, high strength and hard wreathing is the replacement of natural stone with solid pores. At present the artificial ceramic tile in markets is provided with pores and textures through the processing of pressing by concave-convex die, and the deficiencies are as follows: the pores has excessively regular structure, less transition, non-naturalization, and obviously artificial trace, which is not formed the same natural and irregular effects as the pores and textures in natural stones.

Therefore, it is necessary to provide a novel preparation method of a ceramic tile with solid pores as decoration and its product to solve the problems mentioned above.

### BRIEF SUMMARY OF THE INVENTION

In accordance with the disadvantages of the prior art, the present invention provides a novel preparation method of a ceramic tile with solid pores as decoration and its product. The ceramic tile produced by the method is provided with pores and textures which are stochastic-distributed and relatively stable. The ceramic tile has high strength, closely resembling natural stone, environmental protection, practical use, and low costs.

To achieve the technology objects, the present invention adopt the technical means as follows:

A preparation method of a ceramic tile with solid pores as decoration, comprising: preparing a fine material, including a facing material and a base material; distributing and dry-pressing the fine material to form a molded body; drying the molded body; firing the molded body to form a semi-product; treating the surface of the semi-product to form a finished product; preparing the facing material includes a preparation of a pattern facing material, at least a sort of which are provided as a pore former; forming the molded body includes distributing and dry-pressing the pore former with the facing material and base material; and firing the molded body includes firing the facing material under the firing temperature at a range between 1100 and 1250 to form solid pore, fissures and/or texture.

The fine material includes a general ceramic raw material and pore former; the pore former comprises one or more materials selected from the group consisting of graphite powder, carbon powder, carbonate material, sulfate material, carbohydrate material and low temperature glass material.

The carbonate material comprises one or more materials selected from the group consisting of limestone, calcium carbonate and sodium carbonate.

The sulfate material comprises one or more materials selected from the group consisting of plaster stone, plaster, and calcium sulfate.

The carbohydrate material comprises flour and/or bran ash.

A flat ceramic tile with solid pores as decoration produced by the method described above, comprising: a base layer; a facing layer formed on one surface of the base layer; and a bottom layer formed on the other surface of the base layer; the facing layer is provided with pores and/or fissures; the bottom layer is provided with a texture structure thereon for ground-adhering; the base layer is made of porcelain, stoneware, or ceramic.

The facing layer comprises imitating-natural decorative textures thereon which are stochastic-distributed, and the imitating-natural decorative textures comprise one or more textures selected from the group consisting of cloud appearance texture, wood grain texture, and grain appearance texture.

The pores and/or fissures in the facing layer is filled up with filling material, and the filling material is organic resin.

The base layer and bottom layer are also provided with stochastic-distributed pores and/or fissures with different sizes, shapes, depths, and positions; and the pores and/or fissures in facing layer, base layer, and bottom layer are connected with each other.

The texture structure of the bottom layer is grid texture structure, wavy texture structure, or honeycomb texture structure.

The preparation method of a ceramic tile with solid pores as decoration and its product is described in the present invention, and the ceramic tile of batch production by mechanization can also be realized, thus the method is environmental, practical, and lower costs. The ceramic tile with solid pores as decoration provided by the method in present invention is more close to natural stone in sense of touch, because the ceramic tile is provided with pores, fissures and/or imitating-natural textures. The ceramic tile produced by the method has high strength and wide application after the processing of firing, which is under the firing temperature at a range between 1100 and 1250 , and polishing.

### BRIEF DESCRIPTION OF THE DRAWINGS

Fig.1 is a block diagram illustrating the implementing steps of the method in one embodiment of the present invention.

Fig.2 is a block diagram illustrating the implementing steps of the method in another embodiment of the present invention.

Fig.3 is a section schematic diagram of a ceramic tile with solid pores as decoration in one embodiment of the present invention.

Fig.4 is a schematic diagram showing a facing layer of the ceramic tile with solid pores as decoration in one embodiment of the present invention.

Fig.5 is a schematic diagram showing a bottom layer of the ceramic tile with solid pores as decoration in one embodiment of the present invention.

Fig.6 is a schematic diagram showing a facing layer of ceramic tile with solid pores as decoration in another embodiment of the present invention.

Fig.7 is a section schematic diagram of a ceramic tile with solid pores as decoration in another embodiment of the present invention.

### DETAILED DESCRIPTION OF THE INVENTION

The present invention is described herein on reference to the drawings below.

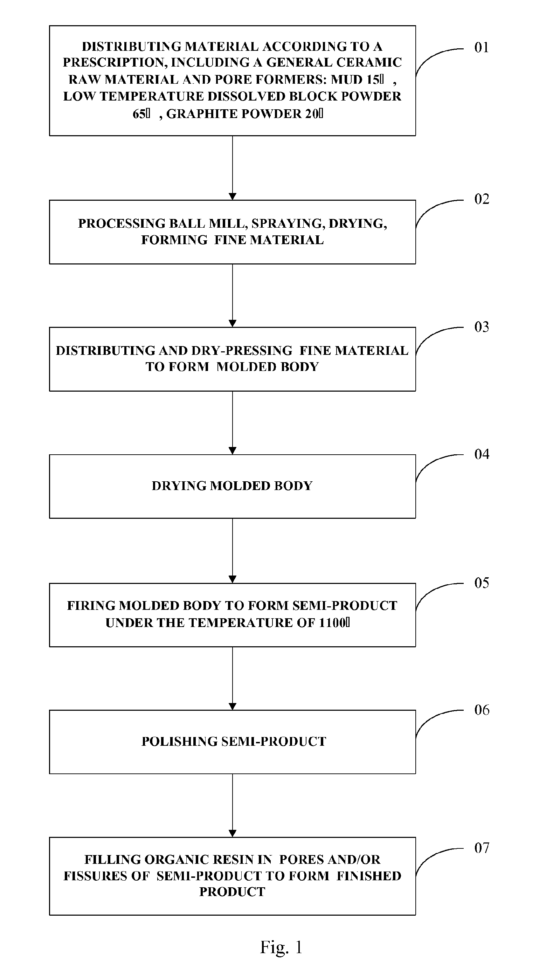

Fig.1 shows the implementing steps of the method, in accordance with one embodiment of the present invention, including:

Step 01: distributing material according to a prescription, including a general ceramic raw material and pore formers: mud 15%, low temperature dissolved block powder 65 %, graphite powder 20 % ;

Step 02: processing ball mill, spraying, drying, forming a fine material;

Step 03: distributing and dry-pressing the fine material to form a molded body;

Step 04, drying the molded body;

Step 05: firing the molded body to form a semi-product under the temperature of 1100°C;

Step 06: polishing the semi-product;

Step 07: filling organic resin in the pores and/or fissures of the semi-product to form a finished product;

The firing temperature in step 05 can be set to be 1200 , and the graphite powder in step 01 can be replaced by carbon powder in other embodiments of the present invention.

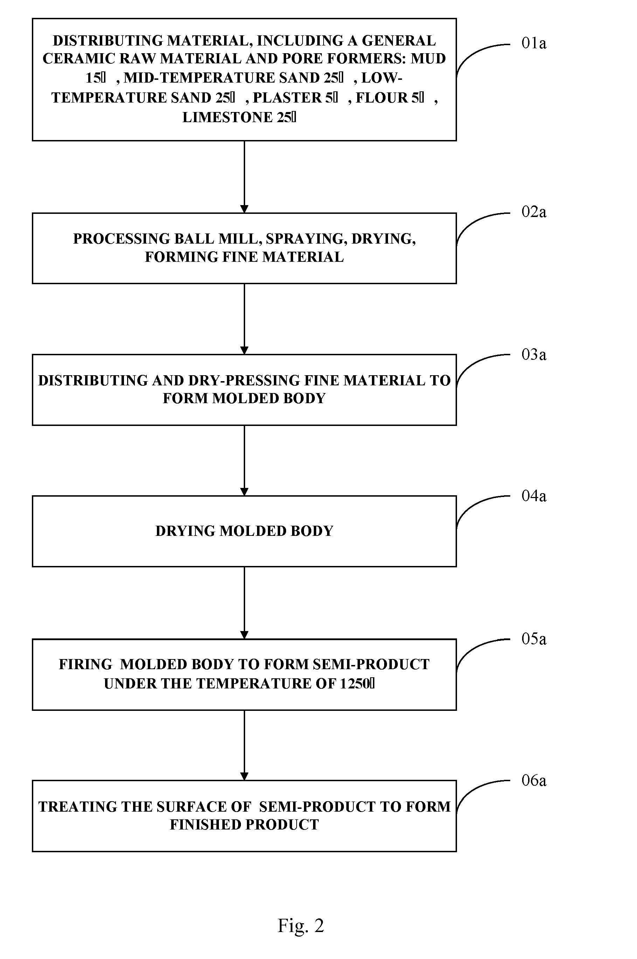

Fig.2 illustrates the implementing steps of the method in another embodiment of the present invention, including:

Step 01a: distributing material, including a general ceramic raw material and pore formers: mud 15 %, mid-temperature sand 25%, low-temperature sand 25 %, plaster 5 %, flour 5 %, limestone 25 %;

Step 02a: processing ball mill, spraying, drying to form fine material;

Step 03a: distributing and dry-pressing fine material to form a molded body;

Step 04a: drying the molded body;

Step 05a: firing the molded body to form a semi-product under the temperature of 1250°C;

Step 06a: treating the surface of the semi-product to form a finished product.

The firing temperature in step 05a can be set to be 1200°C; the flour in step 01a can be replaced by chaff ash; the plaster in step 01a is selected from the group consisting of plaster stone, plaster, and other calcium sulfate materials; the limestone in step 01a can be replaced by calcium carbonate or sodium carbonate in other embodiments of the present invention.

The added pore former in the embodiment is foamed to form stochastic changing pores with different sizes, shapes, depths, and positions in the processing of high-temperature firing, which makes the ceramic tile produced by the method in present invention more similar to natural stones.

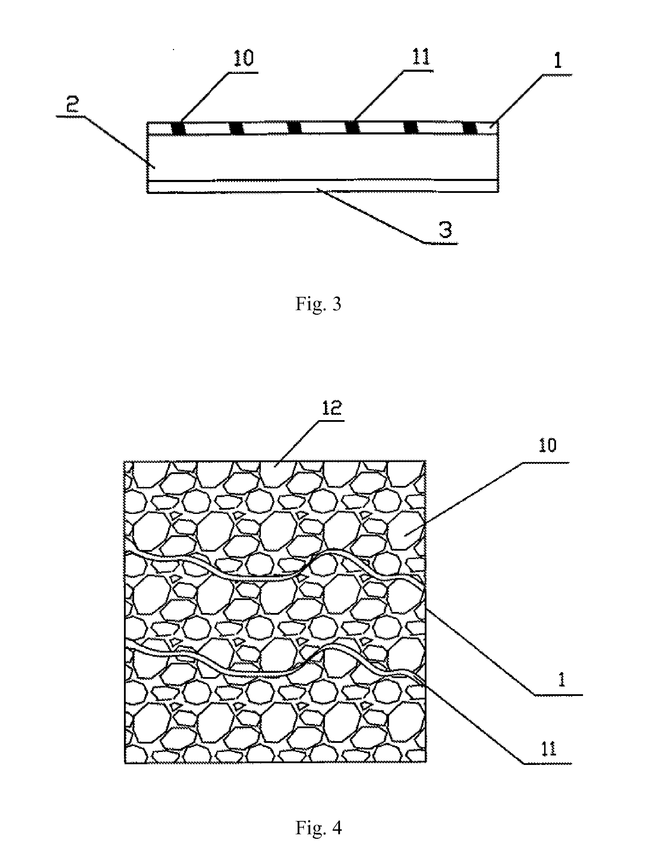

Fig.3 shows a ceramic tile in one embodiment. The ceramic tile is comprised of facing layer 1, base layer 2, and bottom layer 3; the facing layer is provided with pores 10 and fissures 11 in different sizes, shapes, and depths.

Fig.4 shows a facing layer of a ceramic tile in one embodiment. The facing layer is provided with pores 10 and fissures 11 in different sizes, shapes, and depths. The ceramic tile is treated by the processing of drying, high-temperature firing under the temperature at a range between 1100 and 1250°C, cooling, polishing, and then filling organic resin 12 in pores 10 and fissures 11, so that the facing layer 1 becomes smooth.

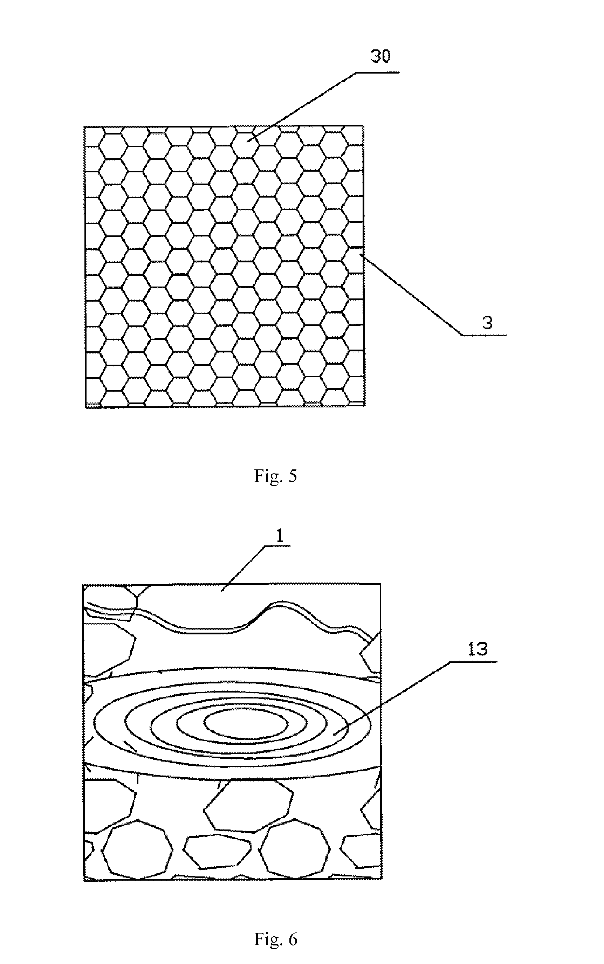

Fig.5 shows a bottom layer of a ceramic tile in one embodiment. The bottom layer 3 is provided with a honeycomb texture structure 30 thereon for adhering. The honeycomb texture structure 30 has rough surface with lots of burrs, so it can be adhered to walls or grounds firmly and conveniently in the processing of assembling with mortar. The bottom layer 3 is also provided with grid texture structure or wavy texture structure in other embodiments of the present invention.

Fig.6 shows a facing layer of a ceramic tile in one embodiment. The facing layer 1 is provided with wood grain texture 13, which is suitable for different situation, and the imitating-natural decorative texture of facing layer 1 can also be cloud appearance texture or grain appearance texture in other embodiments of the present invention.

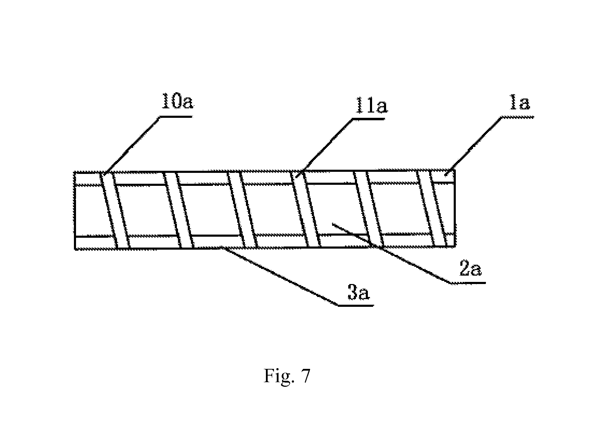

Fig.7 shows a ceramic tile in one embodiment. The facing layer 1a, the base layer 2a, and the bottom layer 3a are provided with stochastic-distributed pores 10a and fissures 11a in different sizes, shapes, and depths. The pores 10a and the fissures 11a are connected with each other through facing layer 1a, base layer 2a, and bottom layer 3a. The advantage of the structure is beautiful and antiskid by absorbing water especially in rainy season. The ceramic tile has a very good application prospect in south China.

The preparation method of a ceramic tile with solid pores as decoration and its product is provided in the present invention, and the ceramic tile of batch production by mechanization can be realized, thus the method is environmental, practical, and lower costs. The ceramic tile with solid pores as decoration provided by the method in present invention is more close to natural stone in sense of touch, because the ceramic tile is provided with pores, fissures, and/or imitating-natural textures. The ceramic tile produced by the method has high strength and wide application after the processing of firing, which is under the firing temperature at a range between 1100 and 1250°C, and polishing.

The description mentioned above is the optimization embodiment, and it is impossible to determine the limited range of the claim by this, therefore, the equate changes based on the patent application scope in present invention still belong to the scope of patent protection in present invention.

## Claims

1. A preparation method of a ceramic tile with solid pores as decoration, comprising:
preparing a fine material, including a facing material and a base material;
distributing and dry-pressing the fine material to form a molded body;
drying the molded body;
firing the molded body to form a semi-product;
treating the surface of the semi-product to form a finished product;
wherein preparing the facing material includes a preparation of a pattern facing material, at least a sort of which are provided as a pore former;
forming the molded body includes distributing and dry-pressing the pore former with the facing material and base material; and
firing the molded body includes firing the facing material under the firing temperature at a range between 1100 and 1250 to form solid pores, fissures and/or textures.

2. The method according to claim 1, wherein the fine material includes a general ceramic raw material and pore formers; the pore former comprises one or more materials selected from the group consisting of graphite powder, carbon powder, carbonate material, sulfate material, carbohydrate material and low temperature glass material.

3. The method according to claim 2, wherein the carbonate material comprises one or more materials selected from the group consisting of limestone, calcium carbonate and sodium carbonate.

4. The method according to claim 2, wherein the sulfate material comprises one or more materials selected from the group consisting of plaster stone, plaster, and calcium sulfate.

5. The method according to claim 2, wherein the carbohydrate material comprises flour and/or bran ash.

6. A flat ceramic tile with solid pores as decoration produced by the method of claim 1, comprising:
a base layer;
a facing layer formed on one surface of the base layer; and
a bottom layer formed on the other surface of the base layer;
wherein the facing layer is provided with pores and/or fissures; the bottom layer is provided with a texture structure thereon for ground-adhering; and the base layer is made of porcelain, stoneware, or ceramic.

7. The ceramic tile according to claim 6, wherein the facing layer comprises imitating-natural decorative textures thereon which are stochastic-distributed, and the imitating-natural decorative textures comprise one or more textures selected from the group consisting of cloud appearance texture, wood grain texture, and grain appearance texture.

8. The ceramic tile according to claim 6, wherein the pores and/or fissures in the facing layer are filled up with filling material, and the filling material is organic resin.

9. The ceramic tile according to claim 6, wherein the base layer and bottom layer are also provided with stochastic-distributed pores and/or fissures with different sizes, shapes, depths, and positions; and
the pores and/or fissures in the facing layer, the base layer, and bottom layer are connected with each other.

10. The ceramic tile according to claim 6, wherein the texture structure of the bottom layer is grid texture structure, wavy texture structure, or honeycomb texture structure.
